# EUROPÄISCHE PATENTSCHRIFT

(11) **EP 1 435 323 B1**
(45) Veröffentlichungstag und Bekanntmachung des Hinweises auf die Patenterteilung: **09.04.2008**
(21) Anmeldenummer: 04008563.1
(22) Anmeldetag: 23.12.1999
(51) Int. Cl.: B62J 15/02

(54) **Radschützer für Zweiräder**
Mudguard for bicycle
Garde-boue pour bicyclette

(30) Priorität: 15.02.1999 DE 29902644 U
(43) Veröffentlichungstag der Anmeldung: 07.07.2004
(62) Teilanmeldung aus: 01128675.4
(73) Patentinhaber: sks metaplast Scheffer-Klute GmbH, 59846 Sundern (DE)
(72) Erfinder: Feldmann, Stefan, 59846 Sundern (DE); Wahl, Oliver, 45131 Essen (DE)
(74) Vertreter: Basfeld, Rainer

(56) Entgegenhaltungen:
- DE-U- 8 804 650
- DE-U- 9 203 790
- TW-B- 250 053

## Beschreibung

Die vorliegende Erfindung betrifft einen Radschützer gemäß dem Oberbegriff des Anspruchs 1.

Es ist bekannt, daß bei modernen Zweirädern, insbesondere sogenannten Mountainbikes, die Benutzer mit dem Fahrrad je nach Witterung mal mit und mal ohne Radschützer fahren. Bei gutem Wetter wird der Radschützer meist nicht benötigt, so daß ein Interesse daran besteht, eine einfache lösbare Befestigung für den Radschützer zu schaffen, die es dem Benutzer ermöglicht, möglichst ohne Werkzeug den Radschützer vom Vorderrad des Zweirads zu demontieren. Andererseits sind viele Zweiräder, insbesondere Mountainbikes, mit denen im Gelände gefahren wird, heute bereits mit einer in sich federnden Vorderradgabel ausgerüstet, um einen entsprechenden Dämpfungseffekt zu erzielen, wenn der Fahrer auf unebenem Untergrund mit Schlaglöchern und dergleichen fährt. Die bislang bekannten Zweiräder haben, sofern der Radschützer für das Vorderrad demontierbar ist, in der Regel solche Befestigungseinrichtungen, die eine umständliche Montage nur mit Hilfe eines Werkzeugs ermöglichen. Außerdem sind die Befestigungseinrichtungen für den Radschützer nicht immer für Zweiräder mit einfedernder Vorderradgabel.

Ein Radschützer der eingangs genannten Art ist aus der taiwanesischen Patentanmeldung TW 82214898 bekannt. Der darin beschriebene Radschützer weist ein Spreizelement auf, das in ein rohrförmiges Teil der Gabel eines Zweirades einschiebbar und dort vermittels Einschrauben eines Spreizkonus in eine Spreizhülse vermittels einer Schraube festlegbar ist. Mit diesem Spreizelement kann vermittels weiterer Schrauben ein Verbindungsteil befestigt werden, wobei die Schrauben durch Langlöcher des Radschützers in das Verbindungsteil eingeschraubt werden und in ihrer Endposition an dem Verbindungsteil festgelegt werden können. Der Radschützer besteht aus zwei Teilen, die an zwei gegenüberliegenden Seiten des Verbindungsteils angebracht werden können.

Aus dem deutschen Gebrauchsmuster DE 88 04 650 U1 sind Radschützer für das Hinterrad bzw. für das Vorderrad eines Zweirades bekannt, die an dem Rahmen des Zweirades festlegbare Schiebeelemente aufweisen, die in entsprechende Aufnahmen an dem Radschützer einschiebbar und klemmend darin festlegbar sind. Vermittels dieser Rastelemente kann nach Montage des Radschützers an dem Zweirad die Position des Radschützers verändert werden.

Die Aufgabe der vorliegenden Erfindung besteht somit darin, einen Radschützer für ein Zweirad mit einer Einrichtung zur lösbaren Befestigung des Radschützers im Bereich der Gabel des Zweirads zu schaffen, bei dem die Demontage beziehungsweise Montage des Radschützers einfach und ohne Werkzeug erfolgen kann, wobei die Befestigung des Radschützers auch für Zweiräder mit einfedernder Vorderradgabel geeignet ist.

Diese Aufgabe wird erfindungsgemäß durch einen Radschützer der eingangs genannten Art mit den kennzeichnenden Merkmalen des Anspruchs 1 gelöst.

Das genannte Schiebeelement kann beispielsweise etwa plattenförmig ausgebildet sein und in eine schienenartige Anformung am Radschützer einschiebbar sein. Dies kann beispielsweise gemäß einer bevorzugten konstruktiven Lösung so erfolgen, daß das Schiebeelement seitliche Nuten aufweist, in die Teile der schienenartigen Anformungen am Radschützer eingreifen. Um das Schiebeelement lösbar mit dem Radschützer zu verbinden, eignet sich beispielsweise eine vorzugsweise unterseitig am Schiebeelement angebrachte Rasteinrichtung, die mit entsprechenden Rastelementen am Radschützer zusammenwirkt. Eine bevorzugte erfindungsgemäße Weiterbildung sieht vor, daß am Radschützer in der Regel lösbar ein Winkelteil befestigbar ist, an dem die genannten Rastelemente für das Schiebeelement angeformt sind. Das Lösen des Radschützers kann zum Beispiel derart erfolgen, daß an dem Winkelteil eine federnde Zunge angeformt ist, an der sich die Rastelemente befinden und die dann nach unten gedrückt werden kann, so daß die Rastelemente außer Eingriff gelangen mit der Rasteinrichtung an dem Schiebeelement. Dazu weist die federnde Zunge beispielsweise endseitig eine Entriegelungsvorrichtung auf, die vorzugsweise von der Oberseite des Radschützers her bedienbar ist, wobei nach der Entriegelung durch Druck von oben her das Schiebeelement aus den schienenartigen Anformungen herausschiebbar und somit der Radschützer lösbar ist.

Die Demontage des genannten Winkelteils vom Radschützer ist im normalen Gebrauch nicht notwendig. Wenn das Winkelteil am Radschützer lösbar befestigbar ist, vorzugsweise über Rastelemente an diesem einrastbar ist, so hat dies vor allem fertigungstechnische Vorteile beziehungsweise bei der Montage beim Hersteller.

Gemäß der vorliegenden Erfindung wirken also im Prinzip zwei Elemente zusammen, die die Befestigungseinrichtung des Radschützers bilden, nämlich zum einen das Spreizelement, das in das Innere eines rohrförmigen Teils der Gabel (Vorderradgabel) des Zweirads schiebbar und dort klemmend festlegbar ist. Wird der Radschützer von dem Zweirad demontiert, dann kann dieses Spreizelement im Inneren der Gabel verbleiben, auch wenn der Benutzer anschließend das Fahrrad ohne Radschützer fährt, so daß anschließend, wenn erneut der Radschützer gebraucht wird, dieser wieder mit wenigen Handgriffen anbringbar ist und zwar über das genannte Schiebeelement, das das zweite wesentliche Element der Befestigungseinrichtung ist und das mit dem Spreizelement verbindbar ist, wobei auch das Schiebeelement bei der Demontage des Radschützers an der Vorderradgabel verbleiben kann. Das Lösen des Radschützers von diesem Schiebeelement erfolgt durch eine einfache Schiebebewegung, wobei zuvor vorzugsweise eine Entriegelung gelöst wird und erst dann der Radschützer aus dem Schiebeelement herausschiebbar ist.

Eine bevorzugte Weiterbildung der Erfindung sieht vor, daß das Spreizelement wenigstens eine Spreizhülse umfaßt und weiterhin einen Spreizkonus, bei dessen Hineindrehen in die Spreizhülse Teile der Spreizhülse radial nach außen bewegt werden und dadurch die Spreizhülse innenseitig in dem rohrförmigen Teil der Gabel verklemmt wird. Dazu sind vorzugsweise an der Spreizhülse Zungen angeformt, die radial federnd ausgebildet sind. Weiterhin weist der Spreizkonus vorzugsweise innenseitig ein Gewinde auf, das sich zum Beispiel auch an einer eingelegten Mutter befinden kann und es ist eine Schraube vorgesehen, die axial durch eine Bohrung der Spreizhülse in das Gewinde des Spreizkonus eingreift. Man kann dann diese Schrauben anziehen, wodurch der Spreizkonus in die Spreizhülse hineingezogen wird und dadurch sich die radial federnden Zungen der Spreizhülse nach außen spreizen und in dem rohrförmigen Teil der Gabel verklemmen. Diese Montage des Schiebeelements und des Spreizelements an der Vorderradgabel erfolgt aber wie bereits erwähnt wurde in der Regel beim Anwender nur wenn eine Nachrüstung mit einem solchen lösbaren Radschützer gewünscht ist, so daß das Lösen der Schraube zum Beispiel nur dann erforderlich ist, oder wenn ein Defekt vorliegt, zum Beispiel wenn das Schiebeelement beschädigt ist, wohingegen für das Abnehmen des Radschützers diese Schraube nicht gelöst werden muß und somit kein Werkzeug erforderlich ist.

Die Erfindung sieht vor, daß der Radschützer etwa in dem Bereich, in dem die Anbringung an der Vorderradgabel erfolgt, einen stufenförmigen Versatz aufweist. Im Bereich dieses stufenförmigen Versatzes liegt eine senkrechte Wandung des Radschützers. Diese senkrechte Wandung hat vorzugsweise wenigstens eine Aussparung oder einen Durchbruch und ist vorzugsweise so gestaltet, daß beim Einfedern der Vorderradgabel der Radschützer am festen Teil des Vorderrads vorbeigleiten kann. Häufig haben nämlich die Vorderradgabeln etwa in Höhe des Radschützers eine Ringwulst, die den beim Einfedern der Vorderradgabel notwendigen Platz vorgibt. Der erfindungsgemäß bevorzugte Durchbruch oder die Aussparung läßt es zu, den Radschützer im Bereich der senkrechten Wandung des stufenförmigen Versatzes dicht an die Vorderradgabel anliegend zu montieren.

Die in den Unteransprüchen genannten Merkmale betreffen bevorzugte Weiterbildungen der Erfindung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine schematisch vereinfachte Darstellung eines im Bereich der Fahrradgabel eines Fahrrads befestigten erfindungsgemäßen Radschützers;
- Fig. 2: eine vergrößerte Detaildarstellung eines Ausschnitts II von Fig. 1 im teilweisen Schnitt;
- Fig. 3: eine Explosionsdarstellung eines erfindungsgemäßen Radschützers sowie des daran befestigbaren Winkelteils;
- Fig. 4: eine Draufsicht auf den erfindungsgemäßen Radschützer;
- Fig. 5: eine Längsschnitt-Darstellung des erfindungsgemäßen Radschützers entlang der Linie V-V von Fig. 4;
- Fig. 6a: eine Seitenansicht des erfindungsgemäßen Winkelteils;
- Fig. 6b: eine Vorderansicht des Winkelteils von Fig. 6a;
- Fig. 6c: eine Ansicht des Winkelteils von Fig. 6a von der anderen Seite her;
- Fig. 6d: eine Draufsicht auf das Winkelteil von Fig. 6a;
- Fig. 7a: eine Ansicht des erfindungsgemäßen Schiebeelements von unten;
- Fig. 7b: eine Seitenansicht des Schiebeelements von Fig. 7a;
- Fig. 7c: eine Vorderansicht des Schlebeelements von Fig. 7a;
- Fig. 7d: eine Draufsicht auf das Schiebeelement von Fig. 7a;
- Fig. 8: eine Explosionsdarstellung eines Teils der Radschützerbefestigung;
- Fig. 9a: eine Seitenansicht der Spreizhülse;
- Fig. 9b: eine Draufsicht auf die Spreizhülse von Fig. 9a;
- Fig. 10a: eine Seitenansicht eines Spreizkonus für die Befestigung des erfindungsgemäßen Radschützers;
- Fig. 10b: eine weitere Ansicht des Spreizkonus von Fig. 10a;
- Fig. 10c: eine Draufsicht auf den Spreizkonus von Fig. 10a.

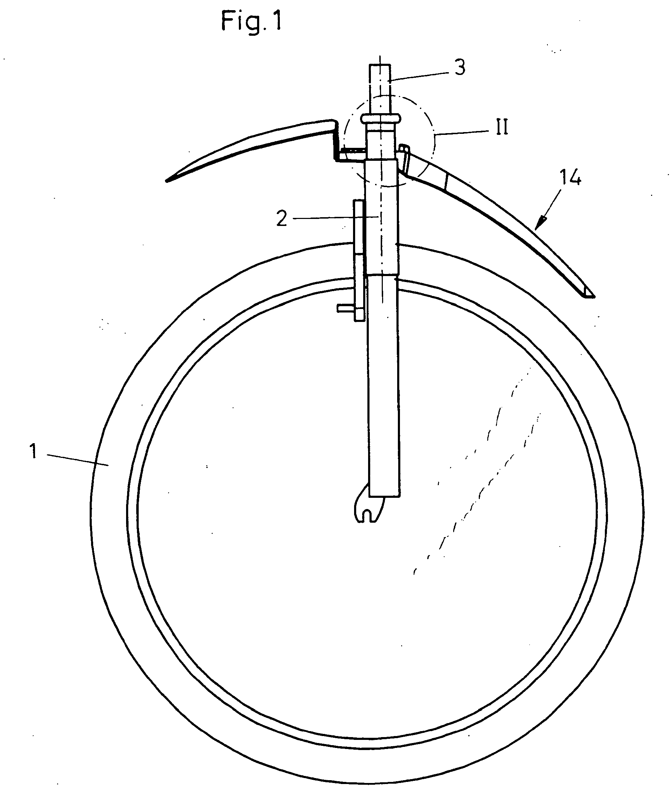

Zunächst wird auf Fig. 1 Bezug genommen. Diese Darstellung zeigt schematisch vereinfacht einen Ausschnitt eines Fahrrads im Bereich des Vorderrads 1, wobei dieses Fahrrad mit einer sogenannten federnden Vorderradgabel 2 ausgerüstet ist. Erfindungsgemäß ist vorgesehen, daß der Radschützer 14 an dieser federnden Vorderradgabel 2 lösbar befestigt ist, so daß er bei Bedarf abgenommen werden kann, wenn der Besitzer des Fahrrads mit diesem ohne den vorderen Radschützer fahren möchte.

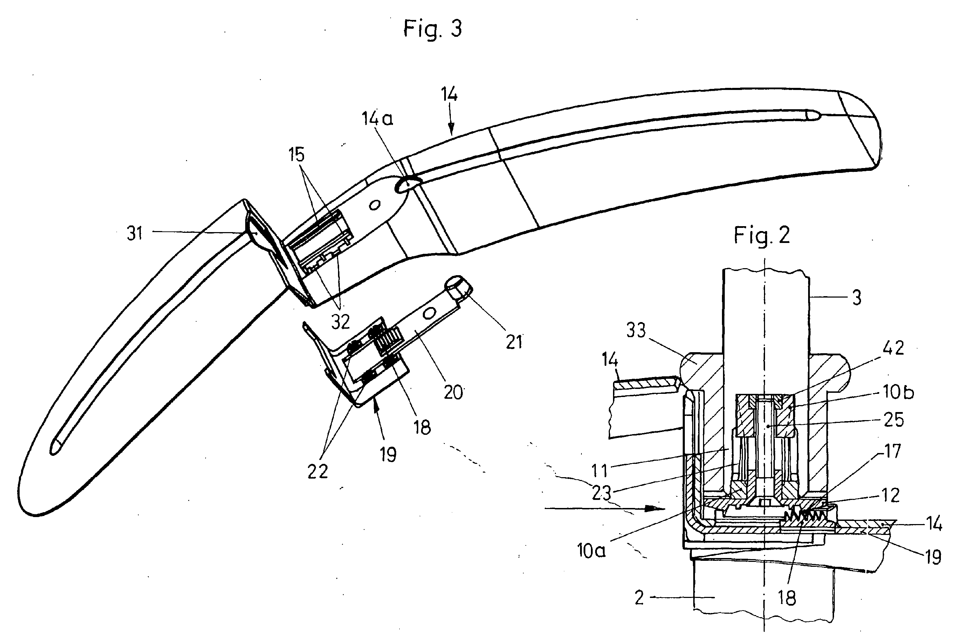

Die aus Fig. 1 ersichtliche stufige Form des Radschützers 14 hängt damit zusammen, daß es sich um eine einfedernde Vorderradgabel 2 handelt, bei der ein Oberteil 3 der Gabel, welches zu dem hier nicht dargestellten Lenker führt, mit einem unteren Teil der Vorderradgabel axial verschiebbar federnd verbunden ist. Den Verbindungsbereich zwischen Radschützer 14 und Vorderradgabel 2, 3 kann man in der vergrößerten Ansicht gemäß Fig. 2 besser erkennen. Dort sieht man, daß der obere Teil der Fahrradgabel ein nach unten hin offenes rohrförmiges Teil 11 umfaßt, in die Teile der Einrichtung zur Befestigung des Radschützers hineinschiebbar sind und zwar insbesondere ein Spreizelement 10, das in dem Ausführungsbeispiel gemäß Fig. 2 vorzugsweise eine Spreizhülse 10a umfaßt sowie einen Spreizkonus 10b. Wenn man diesen Spreizkonus 10b in die Spreizhülse 10a hineindreht, was durch Betätigen der Schraube 25 bewerkstelligt werden kann, die in eine in den Spreizkonus 10b eingelegte Mutter 42 eingreift, dann verschiebt sich der Spreizkonus 10b gegenüber der Spreizhülse 10a in axialer Richtung, das heißt in der Zeichnung gemäß Fig. 2 wandert der Spreizkonus 10b nach unten. Dadurch werden Teile der Spreizhülse 10a radial nach außen bewegt (Spreizbewegung) und die Spreizhülse 10a wird damit wiederum innenseitig in dem rohrförmigen Teil 11 der Gabel verklemmt.

Die Befestigungseinrichtung für den Radschützer 14 umfaßt weiter, wie man aus Fig. 2 erkennt, ein Winkelteil 19, das im wesentlichen flach ist und durch die etwa rechtwinklige Abwinklung der Stufe des Radschützers folgt. Das Winkelteil 19 ist vorzugsweise an dem Radschützer 14 lösbar befestigt. Das Winkelteil 19 hat Rastelemente 18, die beispielsweise etwa im Querschnitt sägezahnförmige ausgebildet sein können. Diese Rastelemente 18 erkennt man auch in der perspektivischen Darstellung gemäß Fig. 3. Diese Rastelemente wirken zusammen mit einer Rasteinrichtung 17 an der Unterseite des Schiebeelements 12, die weiter unten noch näher erläutert wird. Man kann aber in Fig. 2 das Eingreifen dieser Rasteinrichtung 17 in die sägezahnförmigen Rastelemente 18 erkennen. Die Befestigung des Radschützers 14 geschieht so, daß dieser in Richtung des in Fig. 2 eingezeichneten Pfeils vom Benutzer soweit auf das Schiebeelement 12 aufgeschoben wird, bis die in Fig. 2 dargestellte Endposition erreicht ist, in der eine Verrastung gegeben ist. Das heißt, im Regelfall verbleibt das Schiebeelement 12 beim Abnehmen des Radschützers 14 an der Gabel des Fahrrads. Das heißt, die Schraube 25, die das Schiebeelement 12 und das Spreizelement mit der Spreizhülse 10a und dem Spreizkonus 10b festlegt, verbleibt in der in Fig. 2 dargestellten Befestigungsposition in dem rohrförmigen Teil 11 der Gabel, gegebenenfalls auch dann, wenn der Anwender das Fahrrad ohne den Radschützer 14 benutzt. Das Montieren der Spreizhülse 10a und des Schiebeelements 12 erfolgt also in der Regel beim Anwender zum Beispiel zur Nachrüstung. Wesentlich ist dabei aber, daß die ganze Befestigungseinrichtung für den Radschützer so konzipiert ist, daß der Radschützer vom Benutzer vom Fahrrad abgenommen werden kann, ohne daß dieser dazu ein Werkzeug benötigt. Dies wird nachfolgend näher erläutert.

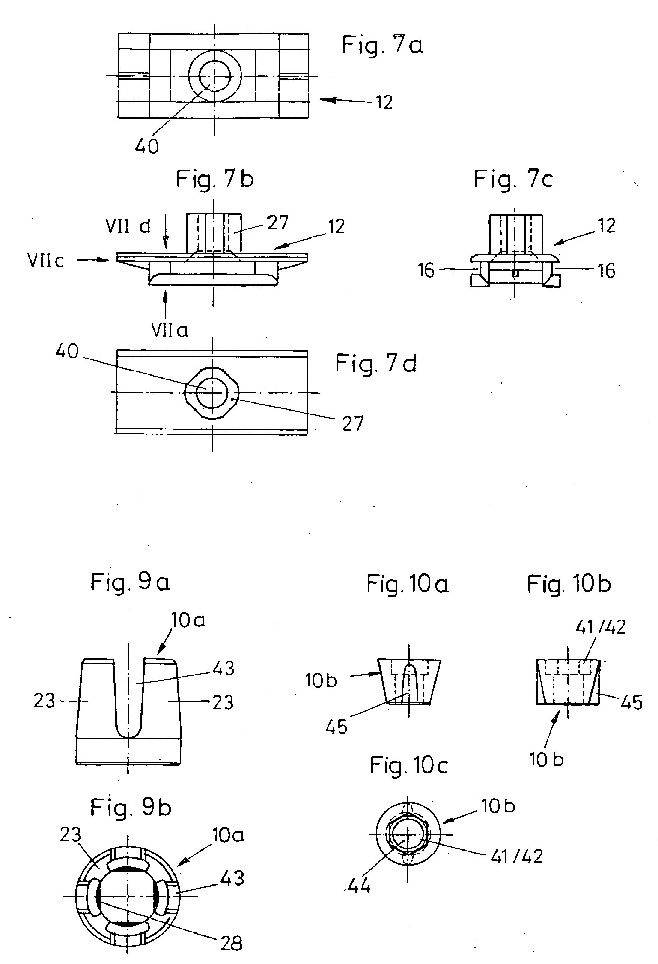

Es wird dabei zunächst unter Bezugnahme auf die Figuren 3 bis 5 der Radschützer näher erläutert. In Fig. 3 sieht man den Radschützer 14 und das von diesem gelöste Winkelteil 19. Man erkennt die Rastelemente 18 am Winkelteil für die Verbindung mit dem Schiebeelement 12. Außerdem hat das Winkelteil 19 eine angeformte relativ langgestreckte sich zu einer Seite hin erstreckende federnde Zunge 20, an der sich nicht nur die Rastelemente 18 oberseitig befinden, sondern an deren Ende auch eine Entriegelungsvorrichtung 21 vorgesehen ist, die beispielsweise etwa knopfartig ausgebildet sein kann. Diese Entriegelungsvorrichtung 21 ist dazu da, den Radschützer 14 ohne Werkzeug von der Fahrradgabel zu lösen. Der Radschützer 14 hat wie man sieht eine die Entriegelungsvorrichtung 21 aufnehmende Öffnung 14a, so daß die Entriegelungsvorrichtung in Form eines Knopfs 21 oder dergleichen ein Stück durch den Radschützer 14 nach oben hin hindurchragt. Da die Zunge 20 nach unten hin federnd ausgebildet ist, kann die Bedienungsperson beim Lösen von oben her auf die Zunge 20 drücken und die auf der Zunge 20 befindlichen Rastelemente 18 gelangen dann außer Eingriff mit der Rasteinrichtung 17, die sich an dem Schiebeelement 12 befindet (siehe dazu Fig. 2). Das Schiebeelement 12 ist in Fig. 3 nicht dargestellt. Man erkennt aber in Fig. 3 die etwa schienenartige Anformung 15 des Radschützers 14, in die das Schiebeelement 12, das jeweils seitliche Nuten 16 aufweist, die in Fig. 7c erkennbar sind, in Längsrichtung des Radschützers 14 einschiebbar ist bzw. umgekehrt nach Lösen der Entriegelungsvorrichtung 21 wird der Radschützer 14 entgegen der Richtung des in Fig. 2 eingezeichneten Pfeils in Längsrichtung verschoben, da die Rasteinrichtung 17 / 18 gelöst ist, solange die Zunge 20 heruntergedrückt ist und der Radschützer 14 kann dann vom Fahrrad genommen werden.

Wie man aus Fig. 3 erkennt, hat das Winkelteil 19 außerdem weitere Rastelemente 22, die jeweils seitlich zu beiden Seiten neben der Zunge 20 liegen und am Radschützer 14 sind diesen Rastelementen 22 zugeordnete entsprechende Rastöffnungen 32 vorgesehen, so daß auch das Winkelteil 19 am Radschützer 14 lösbar befestigbar ist. Ein solches Lösen ist im Regelfall nicht notwendig, wenn der Radschützer 14 vom Fahrrad abgenommen wird, kann aber erforderlich sein, wenn zum Beispiel das Winkelteil 19 beschädigt ist. Außerdem wird dadurch die Montage des Winkelteils über die Rastelemente 22 an dem Radschützer 14 bei der Fertigung erleichtert.

Der Radschützer 14 ist außerdem, wie man aus Fig. 3, 4, 5 erkennt, so geformt, daß er in der Seitenansicht gesehen im Bereich der Befestigungseinrichtung einen stufenförmigen Versatz 29 aufweist und das Winkelteil 19 ist entsprechend der Höhe der Stufe dieses stufenförmigen Versatzes 29 dimensioniert und wird in diesem Bereich an dem Radschützer 14 befestigt. Weiterhin ist erkennbar, daß der Radschützer 14 im Bereich der senkrechten Wandung 30 oberhalb des stufenförmigen Versatzes 29 und zwar oberhalb des Winkelteils 19 (bei befestigtem Winkelteil) eine Aussparung 31 aufweist, die man auch in Fig. 2 erkennen kann. Diese Aussparung 31 ist deshalb vorgesehen, da der Radschützer 14 sich beim Einfedern der Gabel 2 des Vorderrads gegenüber einem festen Teil des Vorderrads bewegt. Dadurch ist genügend Platz für den vorbeigleitenden Radschützer gegeben. Die Aussparung 31 ist, wie man aus Fig. 3 erkennen kann, in der Draufsicht gesehen mit einem Radius geformt, das heißt sie beschreibt einen Teilkreisbogen und entspricht damit der Umfangsform der Ringwulst 33 für den Steuersatz des Kugellagers.

Der Steuersatz (Ringwulst) und der Radschützer bewegen sich nicht gegeneinander. Sie sind beide am einfedernden Teil der Gabel befestigt. Die Engstelle ist der Abstand zwischen Steuersatz und dem Verbindungsflansch, der die beiden Gabelrohre verbindet. Diese Engstelle wird durch den Radschützer nicht zusätzlich verengt, da der Radschützer durch den Durchbruch 31 den Raum nutzt, den der Steuersatz vor der Gabelbrücke vorsteht.

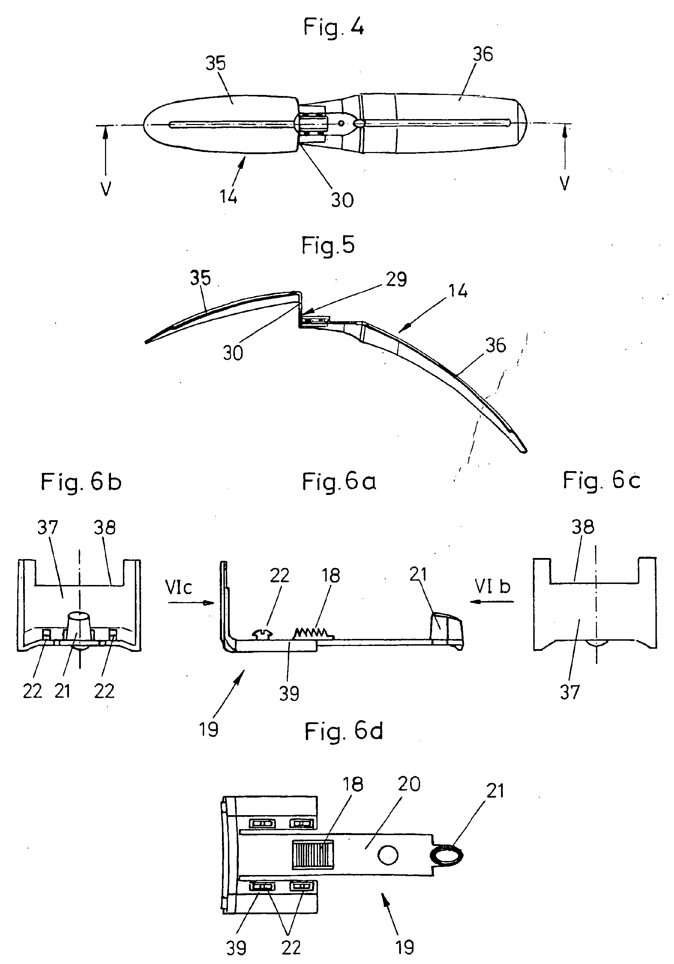

In den Figuren 4 und 5 ist noch einmal der Radschützer 14 ohne das Winkelteil 19 im Längsschnitt bzw. in der Draufsicht dargestellt. Der Radschützer 14 hat einen vorderen gekrümmten Abschnitt 35, von dem aus sich dann die senkrechte Wandung 30 nach unten hin erstreckt. Es folgt dann der stufenförmige Versatz 29, in dessen Bereich das Winkelteil 19 eingebaut wird (siehe auch Fig. 3). Im Anschluß an den stufenförmigen Versatz 29 verläuft der Radschützer zunächst ein kurzes Stück gerade und dann folgt wiederum ein hinterer gekrümmter Abschnitt 36.

In den Figuren 6a bis 6d ist noch einmal das Winkelteil 19 für sich genommen in verschiedenen Ansichten dargestellt. Man erkennt in Fig. 6d die federnde Zunge 20 mit der endseitigen Entriegelungsvorrichtung 21 und man erkennt weiterhin die Rastelemente 22 für die Verbindung mit dem Radschützer sowie auch die Rastelemente 18, die mit der Rasteinrichtung 17 des Schiebeelements 12 zusammenwirken. Von den Rastelementen 22 sind je zwei an jeder Seite vorgesehen, während sich die Rastelemente 18 auf der federnden Zunge 20 mit Abstand von derem Ende befinden. Aus Fig. 6b erkennt man weiterhin, daß in dem senkrechten Abschnitt 37 des Winkelteils 19 oben eine rechteckige Aussparung 38 vorgesehen ist, die der Aussparung 31 im Radschützer zugeordnet ist. Die Rastelemente 22 befinden sich gemäß Fig. 6d auf einem horizontalen Abschnitt 39 des Winkelteils 19, in dessen Mitte sich wiederum die freigeschnittene und damit federnd bewegliche Zunge 20 befindet.

In den Figuren 7a bis 7d ist noch einmal das Schiebeelement 12 im Detail in mehreren Ansichten dargestellt. In Fig. 7c kann man die seitlichen Nuten 16 erkennen, die das Schiebeelement 12 aufweist, und in die die Teile der schienenartigen Anformungen 15 von der Seite her eingreifen, die sich am Radschützer 14 befinden und in Fig. 3 erkennbar sind. Beim Verschieben des Radschützers 14 gegenüber dem Schiebeelement 12 ergibt sich also eine Art Schienenführung.

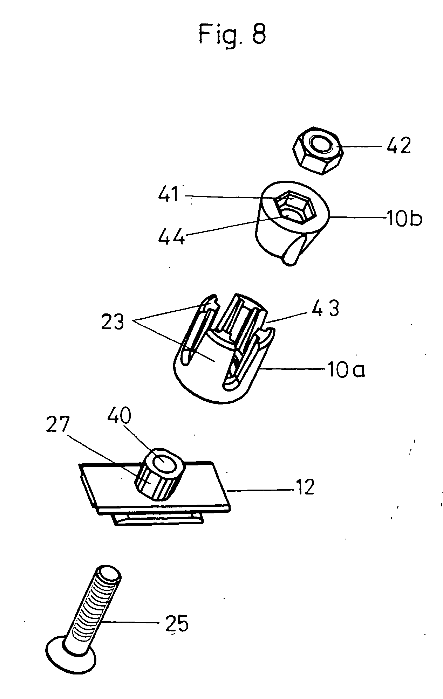

Aus der Draufsicht gemäß Fig. 7d ist erkennbar, daß das etwa plattenförmige Schiebeelement 12 oberseitig eine Mehrkantanformung 27 aufweist. Diesbezüglich wird auch auf die Explosionsdarstellung gemäß Fig. 8 verwiesen. Diese Mehrkantanformung 27 dient dazu, die Spreizhülse 10a, die eine entsprechend geformte Ausnehmung 28 aufweist, drehfest auf das Schiebeelement 12 aufzusetzen. Die etwa achteckige Ausnehmung 28 der Spreizhülse 10a ist in Fig. 9b erkennbar. Wie man aus Fig. 7a sehen kann, hat das Schiebeelement 12 außerdem eine mittige durchgehende Bohrung 40, so daß die in Fig. 8 dargestellte Schraube 25 durch diese Bohrung geschoben werden kann.

Der Aufbau der Befestigungseinrichtung für den Radschützer ist anhand der Explosionsdarstellung von Fig. 8 recht gut ersichtlich und wird nachfolgend anhand dieser Darstellung näher erläutert. Man erkennt das Schiebeelement 12 mit seiner oberseitigen Mehrkantanformung 27, auf die die Spreizhülse 10a aufgesetzt wird. Man erkennt weiterhin den Spreizkonus 10b, in den eine Mutter 42 eingelegt wird, in die das Gewinde der Schraube 25 eingreift. Es wird auch auf Fig. 2 verwiesen. Der Spreizkonus 10b hat außerdem oberseitig eine Sechskantausnehmung 41, die die Mutter 42 aufnimmt. Da der Spreizkonus 10b konisch ist und an seinem unteren Ende schmaler ist als an seinem oberen Ende, werden die radial federnd ausgebildeten Zungen 23 der Spreizhülse 10a um so weiter nach außen gedrückt, je weiter der Spreizkonus 10b in die Spreizhülse 10a hineingeschraubt wird, was wiederum durch Drehung der Schraube 25 bewerkstelligt wird. Wir verweisen auf die Darstellung von Fig. 2. Da die Schraube 25 mit ihrem Gewindeschaft durch die Bohrung 40 des plattenförmigen Schiebeelements 12 hindurchgreift, wird letzteres durch die Schraube 25 an der Fahrradgabel 3 festgelegt, wobei durch die Spreizwirkung des die Spreizhülse 10a radial auseinanderdrückenden Spreizkonus 10b die Spreizhülse innenseitig in dem rohrförmigen Teil 11 der Gabel 3 verklemmt wird. Das Schiebeelement 12 ist wiederum lösbar mit den Rastelementen 18 des Winkelteils 19 verbunden (siehe Fig. 2), wobei das Winkelteil 19 wiederum am Radschützer 14 befestigt ist.

Die Fig. 9a und 9b zeigen in zwei Ansichten noch einmal die Spreizhülse 10a. Man kann dort die radial federnden angeformten Zungen 23 erkennen, von denen beispielsweise vier über den Umfang verteilt angeordnet sind und zwischen denen jeweils Schlitze 43 verlaufen.

In Fig. 10c erkennt man die Sechskantausnehmung 41 in dem Spreizkonus 10b für die Mutter 42 sowie die durchgehende mittige Bohrung 44 des Spreizkonus. Für eine Führung des Spreizkonus 10b in der Spreizhülse 10a können die äußeren seitlichen Anformungen 45 des Spreizkonus dienen, die in die Schlitze 43 der Spreizhülse 10a ragen können.

## Patentansprüche

1. Radschützer für ein Zweirad umfassend eine Einrichtung zur lösbaren Befestigung des Radschützers im Bereich der Gabel des Zweirads, wobei die Einrichtung zur Befestigung wenigstens ein Spreizelement (10) umfaßt, das in das Innere eines rohrförmigen Teils (11) der Gabel schiebbar und dort klemmend festlegbar ist, **dadurch gekennzeichnet, daß**
- die Einrichtung zur Befestigung wenigstens ein mit dem Spreizelement verbindbares Schiebeelement (12) umfasst, das in eine Nut (13) oder Schiene am Radschützer (14) einschiebbar und in einer Endposition lösbar festlegbar ist, daß
- der Radschützer (14) werkzeuglos an dem Schiebeelement (12) montierbar und/oder demontierbar ist, und daß
- der Radschützer (14) in der Seitenansicht gesehen im Bereich der Einrichtung zur Befestigung wenigstens einen stufenförmigen Versatz (29) und eine im Bereich dieses stufenförmigen Versatzes (29) angeordnete senkrechte Wandung (30) aufweist.

2. Radschützer nach Anspruch 1, **dadurch gekennzeichnet, daß** das Schiebeelement (12) etwa plattenförmig ausgebildet ist und in eine schienenartige Anformung (15) am Radschützer (14) einschiebbar ist.

3. Radschützer nach Anspruch 2, **dadurch gekennzeichnet, daß** das Schiebeelement (12) seitliche Nuten (16) aufweist, in die Teile der schienenartigen Anformungen (15) eingreifen.

4. Radschützer nach einem der Ansprüche 1 bis 3, **dadurch gekennzeichnet, daß** das Schiebeelement (12) unterseitig wenigstens eine Rasteinrichtung (17) aufweist, die mit entsprechenden Rastelementen (18) am Radschützer (14) zusammenwirkt.

5. Radschützer nach Anspruch 4, **dadurch gekennzeichnet, daß** am Radschützer ein Winkelteil (19) befestigbar ist, an dem die Rastelemente (18) angeformt sind.

6. Radschützer nach Anspruch 5, **dadurch gekennzeichnet, daß** an dem Winkelteil (19) eine federnde Zunge (20) angeformt ist, an der sich die Rastelemente (18) befinden.

7. Radschützer nach Anspruch 6, **dadurch gekennzeichnet, daß** die federnde Zunge (20) endseitig eine Entriegelungsvorrichtung (21) aufweist, die vorzugsweise von der Oberseite des Radschützers (14) her bedienbar ist, wobei nach der Entriegelung das Schiebeelement (12) aus den schienenartigen Anformungen (15) herausschiebbar und somit der Radschützer lösbar ist.

8. Radschützer nach einem der Ansprüche 5 bis 7, **dadurch gekennzeichnet, daß** das Winkelteil (19) am Radschützer lösbar befestigbar ist, vorzugsweise über Rastelemente (22) an diesem einrastbar ist.

9. Radschützer nach einem der Ansprüche 1 bis 8, **dadurch gekennzeichnet, daß** das Spreizelement (10) wenigstens eine Spreizhülse (10a) umfaßt und daß weiterhin ein Spreizkonus (10b) vorgesehen ist, bei dessen hereindrehen in die Spreizhülse (10a) Teile der Spreizhülse radial nach außen bewegt werden und **dadurch** die Spreizhülse (10a) innenseitig in dem rohrförmigen Teil (11) der Gabel verklemmt wird.

10. Radschützer nach Anspruche 9, **dadurch gekennzeichnet, daß** an der Spreizhülse (10a) Zungen (23) angeformt sind, die radial federnd ausgebildet sind.

11. Radschützer nach einem der Ansprüche 9 bis 10, **dadurch gekennzeichnet, daß** in den Spreizkonus (10b) eine Mutter (42) eingelegt wird, in die eine Schraube (25) eingreift, die axial durch eine Bohrung (26) der Spreizhülse (10a) hindurchgreift.

12. Radschützer nach Anspruch 11, **dadurch gekennzeichnet, daß** mittels der Schraube (25) die Spreizhülse (10a) an dem Schiebeelement (12) festlegbar ist.

13. Radschützer nach einem der Ansprüche 9 bis 12, **dadurch gekennzeichnet, daß** das Schiebeelement (12) eine Mehrkantanformung (27) aufweist, auf die die Spreizhülse (10a) mit einer entsprechend geformten Ausnehmung (28) drehfest aufsetzbar ist.

14. Radschützer nach einem der Ansprüche 5 bis 13, **dadurch gekennzeichnet, daß** das Winkelteil (19) im Bereich des stufenförmigen Versatzes (29) unterseitig am Radschützer befestigbar ist.

## Claims

1. Mudguard for a bicycle, comprising a device for the detachable fixing of the mudguard in the region of the fork of the bicycle, the fixing device comprising at least one expanding element (10) which can be pushed into the interior of a tubular part (11) of the fork and can be fixed in a clamping manner there, **characterized in that**
- the fixing device comprises at least one slide element (12) which can be connected to the expanding element, can be pushed into a groove (13) or a rail on the mudguard (14) and can be fixed detachably in an end position, **in that**
- the mudguard (14) can be mounted on the slide element (12) and/or can be dismantled from it without any tools, and **in that**
- the mudguard (14) has, as seen in side view, at least one step-like offset (29) in the region of the fixing device and a perpendicular wall (30) which is arranged in the region of this step-like offset (29).

2. Mudguard according to Claim 1, **characterized in that** the slide element (12) is approximately plate-like and can be pushed into a rail-like integral moulding (15) on the mudguard (14).

3. Mudguard according to Claim 2, **characterized in that** the slide element (12) has lateral grooves (16), in which parts of the rail-like integral mouldings (15) engage.

4. Mudguard according to one of Claims 1 to 3, **characterized in that** the slide element (12) has on the underside at least one latching device (17) which interacts with corresponding latching elements (18) on the mudguard (14).

5. Mudguard according to Claim 4, **characterized in that** an angled part (19), on which the latching elements (18) are integrally moulded, can be fixed to the mudguard.

6. Mudguard according to Claim 5, **characterized in that** a spring tongue (20) on which the latching elements (18) are located is integrally moulded on the angled part (19).

7. Mudguard according to Claim 6, **characterized in that**, at the end, the spring tongue (20) has an unlocking device (21), which can preferably be operated from the upper side of the mudguard (14), it being possible for the slide element (12) to be pushed out of the rail-like integral mouldings (15) and thus for the mudguard to be detached after the unlocking action.

8. Mudguard according to one of Claims 5 to 7, **characterized in that** the angled part (19) can be fixed detachably to the mudguard, preferably latched to the latter by latching elements (22).

9. Mudguard according to one of Claims 1 to 8, **characterized in that** the expanding element (10) comprises at least one expanding sleeve (10a), and **in that**, furthermore, an expanding cone (10b) is provided which, when it is screwed into the expanding sleeve (10a), causes parts of the expanding sleeve to move radially outwards and, as a result, causes the expanding sleeve (10a) to be clamped on the inside in the tubular part (11) of the fork.

10. Mudguard according to Claim 9, **characterized in that** tongues (23) which are sprung radially are integrally moulded on the expanding sleeve (10a).

11. Mudguard according to either of Claims 9 and 10, **characterized in that** a nut (42) is inserted into the expanding cone (10b), in which nut there engages a screw (25) which passes axially through a hole (26) in the expanding sleeve (10a).

12. Mudguard according to Claim 11, **characterized in that**, by means of the screw (25), the expanding sleeve (10a) can be fixed to the slide element (12).

13. Mudguard according to one of Claims 9 to 12, **characterized in that** the slide element (12) has a polygonal integral moulding (27), on which the expanding sleeve (10a) can be placed with a correspondingly shaped recess (28) so as to be fixed against rotation.

14. Mudguard according to one of Claims 5 to 13, **characterized in that** the angled part (19) can be fixed to the underside of the mudguard in the region of the step-like offset (29).

## Revendications

1. Garde-boue de bicyclette, comprenant un dispositif pour la fixation desserrable du garde-boue dans la région de la fourche de la bicyclette, le dispositif de fixation comprenant au moins un élément d'écartement (10) qui peut être glissé à l'intérieur d'une pièce tubulaire (11) de la fourche et y être fixé par serrage, **caractérisé en ce que**
- le dispositif de fixation comprend au moins un élément de coulissement (12) pouvant être connecté à l'élément d'écartement, qui peut être glissé dans une rainure (13) ou un rail sur le garde-boue (14) et fixé de manière desserrable dans une position finale, **en ce que**
- le garde-boue (14) peut être monté sur l'élément de coulissement (12) et/ou démonté de celui-ci sans outil, et **en ce que**
- le garde-boue (14) présente, considéré en vue de côté, dans la région du dispositif de fixation, au moins un déport (29) en forme d'échelon et une paroi (30) verticale disposée dans la région de ce déport (29) en forme d'échelon.

2. Garde-boue selon la revendication 1, **caractérisé en ce que** l'élément de coulissement (12) est réalisé approximativement en forme de plaque et peut être glissé dans une formation (15) de type rail sur le garde-boue (14).

3. Garde-boue selon la revendication 2, **caractérisé en ce que** l'élément de coulissement (12) présente des rainures latérales (16) dans lesquelles viennent en prise des parties des formations de type rail (15).

4. Garde-boue selon l'une quelconque des revendications 1 à 3, **caractérisé en ce que** l'élément de coulissement (12) présente du côté inférieur au moins un dispositif d'encliquetage (17) qui coopère avec des éléments d'encliquetage correspondants (18) sur le garde-boue (14).

5. Garde-boue selon la revendication 4, **caractérisé en ce que** l'on peut fixer sur le garde-boue une partie coudée (19) sur laquelle sont formés les éléments d'encliquetage (18).

6. Garde-boue selon la revendication 5, **caractérisé en ce qu'**il est formé sur la partie coudée (19) une langue élastique (20) sur laquelle se trouvent les éléments d'encliquetage (18).

7. Garde-boue selon la revendication 6, **caractérisé en ce que** la langue élastique (20) présente, du côté de l'extrémité, un dispositif de déverrouillage (21) qui peut être actionné de préférence depuis le côté supérieur du garde-boue (14), l'élément de coulissement (12) pouvant être glissé hors des formations (15) de type rail après le déverrouillage et de ce fait le garde-boue pouvant être détaché.

8. Garde-boue selon l'une quelconque des revendications 5 à 7, **caractérisé en ce que** la partie coudée (19) peut être fixée de manière desserrable sur le garde-boue, de préférence peut être encliquetée sur celui-ci par le biais d'éléments d'encliquetage (22).

9. Garde-boue selon l'une quelconque des revendications 1 à 8, **caractérisé en ce que** l'élément d'écartement (10) comprend au moins un manchon d'écartement (10a) et **en ce qu'**en outre un cône d'écartement (10b) est prévu, dont la rotation à l'intérieur du manchon d'écartement (10a) provoque le déplacement radial vers l'extérieur de pièces du manchon d'écartement et de ce fait le blocage par serrage du manchon d'écartement (10a) du côté interne dans la partie tubulaire (11) de la fourche.

10. Garde-boue selon la revendication 9, **caractérisé en ce que** des langues (23) sont formées sur le manchon d'écartement (10a), lesquelles sont réalisées de manière radialement élastique.

11. Garde-boue selon l'une quelconque des revendications 9 ou 10, **caractérisé en ce qu'**un écrou (42) est introduit dans le cône d'écartement (10b), dans lequel une vis (25) vient en prise, laquelle vient en prise axialement à travers un alésage (26) du manchon d'écartement (10a).

12. Garde-boue selon la revendication 11, **caractérisé en ce que** le manchon d'écartement (10a) peut être fixé sur l'élément de coulissement (12) au moyen de la vis (25).

13. Garde-boue selon l'une quelconque des revendications 9 à 12, **caractérisé en ce que** l'élément de coulissement (12) présente une formation polygonale (27) sur laquelle le manchon d'écartement (10a) peut être placé fixe en rotation avec un évidement de forme correspondante (28) .

14. Garde-boue selon l'une quelconque des revendications 5 à 13, **caractérisé en ce que** la partie coudée (19) peut être fixée dans la région du déport (29) en forme d'échelon au côté inférieur du garde-boue.
